**Europäisches Patentamt**

**European Patent Office**

**Office européen des brevets**

(19)

(11) **EP 1 176 450 A2**

(12) **EUROPÄISCHE PATENTANMELDUNG**

(43) Veröffentlichungstag:
**30.01.2002 Patentblatt 2002/05**

(51) Int Cl.7: **G02B 27/09**, G02B 3/06

(21) Anmeldenummer: **01115132.1**

(22) Anmeldetag: **22.06.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **28.07.2000 DE 10036787**

(71) Anmelder:
  • **Lissotschenko, Vitalij**
    **44149 Dortmund (DE)**
  • **Hentze, Joachim**
    **59457 Werl (DE)**

(72) Erfinder:
  • **Lissotschenko, Vitalij Dr.**
    **44149 Dortmund (DE)**
  • **Mikhailov, Alexei**
    **44227 Dortmund (DE)**

(74) Vertreter: **Basfeld, Rainer, Dr. Dipl.-Phys. et al Patentanwaltskanzlei Fritz Patent- und Rechtsanwälte Ostentor 9**
    **59757 Arnsberg-Herdringen (DE)**

(54) **Anordnung und Vorrichtung zur optischen Strahltransformation**

(57) Anordnung zur optischen Strahltransformation, die zur Abbildung einer Lichtquelle (1) oder mehrerer Lichtquellen auf die Stirnseite einer Lichtleitfaser (7) dienen kann, umfassend mindestens eine Lichtquelle (1), die mindestens einen Lichtstrahl (9) aussenden kann, sowie weiterhin umfassend ein Abbildungselement (2) und mindestens eine Vorrichtung (3) zur optischen Strahltransformation, wobei das Abbildungselement (2) den von der mindestens einen Lichtquelle ausgesandten mindestens einen Lichtstrahl (9) auf die mindestens eine Vorrichtung (3) zur optischen Strahltransformation abbilden kann, wobei der mindestens eine Lichtstrahl (9) durch diese zumindest teilweise hindurchtreten kann und wobei die Vorrichtung (3) zur optischen Strahltransformation auf einer Eintritts- und/oder Austrittsfläche des oder der Lichtstrahlen (9, 10, 11, 12, 16, 18, 21) mindestens eine konkave toroidale refraktive Fläche (8) aufweist, so dass die mindestens eine Vorrichtung (3) zur optischen Strahltransformation den Querschnitt (10) des durch sie hindurchtretenden mindestens einen Lichtstrahls (9) zumindest abschnittsweise an einer zu der Ausbreitungsrichtung (z) des jeweiligen Abschnitts des Lichtstrahls (9) parallelen Ebene (s) spiegeln kann.

Fig. 3a

**Beschreibung**

Die vorliegende Erfindung betrifft eine Anordnung und eine Vorrichtung zur optischen Strahltransformation, insbesondere eine Anordnung, die zur Abbildung einer Lichtquelle oder mehrerer Lichtquellen auf die Stirnseite einer Lichtleitfaser dienen kann, umfassend mindestens eine Lichtquelle, die mindestens einen Lichtstrahl aussenden kann, sowie weiterhin umfassend ein Abbildungselement und mindestens eine Vorrichtung zur optischen Strahltransformation, wobei das Abbildungselement den von der mindestens einen Lichtquelle ausgesandten mindestens einen Lichtstrahl auf die mindestens eine Vorrichtung zur optischen Strahltransformation abbilden kann, und wobei der mindestens eine Lichtstrahl durch diese zumindest teilweise hindurchtreten kann.

Eine Anordnung und eine Vorrichtung der vorgenannten Art sind aus der europäischen Patentschrift EP 0 484 276 B1 bekannt. Bei der darin beschriebenen Anordnung wird das Licht von mehreren in einer Reihe angeordneten Diodenlasern auf die Stirnseite einer Lichtleitfaser fokussiert. Anstelle mehrerer Diodenlaser kann auch das Licht eines Laserdiodenbarrens mit mehreren in einer Reihe liegenden linienförmigen emittierenden Abschnitten auf die Stirnseite der Lichtleitfaser abgebildet werden. Als Vorrichtung zur optischen Strahltransformation wird in der genannten Patentschrift pro Teilstrahl eines der Diodenlaser ein Abbé-König-Prisma verwendet. Jeder dieser Lichtstrahlen mit im wesentlichen linienförmigem Querschnitt wird in einem jeden dieser Abbé-König-Prismen um etwa 90° gedreht. Eine derartige Drehung von Lichtstrahlen, die von in einer Reihe liegenden linienförmigen Lichtquellen ausgehen, erweist sich insbesondere deshalb als sinnvoll, weil aufgrund der Divergenz der einzelnen Teilstrahlen in Linienrichtung eine Vermischung der einzelnen Teilstrahlen erfolgen kann, die eine effektive Abbildung der Teilstrahlen auf die Stirnseite der Lichtleitfaser mit einfachen Mitteln unmöglich macht. Die Verwendung eines Abbé-König-Prismas zur Drehung der einzelnen Teilstrahlen erweist sich jedoch als nachteilig, da es sich bei dem Abbé-König-Prisma um ein zum einen sehr kompliziert aufgebautes teures optisches Bauteil handelt. Zum andern müssen die einzelnen Teilstrahlen voneinander separiert in eine ganze Vielzahl von nebeneinander liegenden voneinander separierten Abbé-König-Prismen eingeleitet werden. Aufgrund der notwendigen Aufspaltung in einzelne Teilstrahlen oder Teilstrahlenbündel kann mit der vorbekannten Vorrichtung das Licht einer flächenförmigen Lichtquelle nicht effektiv in einen vorgegebenen Raumbereich abgebildet, bzw. insbesondere nicht oder nur sehr unvollständig abschnitts- oder segmentweise gedreht werden.

Eine weitere Anordnung und eine weitere Vorrichtung der eingangs genannten Art sind aus der europäischen Patentanmeldung EP 10 06 382 A1 bekannt. Die darin beschriebene Vorrichtung zur optischen Strahltransformation weist ein Array von Zylinderlinsensegmenten auf, deren Zylinderachsen gegenüber der Längsrichtung einer beispielsweise als Laserdiodenbarren ausgeführten Lichtquelle um 45° geneigt sind. Dadurch wird erreicht, dass der beziehungsweise die in die Vorrichtung eintretenden Lichtstrahlen abschnittsweise um 90° während des Durchtrittes durch die Vorrichtung gedreht werden. Als nachteilig bei dieser Vorrichtung erweist sich, dass durch die Wahl von Zylinderflächen als Eintritts- und/oder Austrittsflächen Abbildungsfehler wie insbesondere astigmatische Abbildungsfehler in Kauf genommen werden.

Das der vorliegenden Erfindung zugrundeliegende Problem ist die Schaffung einer Anordnung zur optischen Strahltransformation der eingangs genannten Art sowie einer Vorrichtung zur optischen Strahltransformation der eingangs genannten Art, die einfach und kostengünstig herstellbar sind und fehlerfreier abbilden können.

Dies wird erfindungsgemäß durch eine Anordnung mit den Merkmalen des Anspruchs 1 und eine Vorrichtung mit den Merkmalen des Anspruchs 5 erzielt. Erfindungsgemäß weist die mindestens eine Eintrittsfläche und/oder die mindestens eine Austrittsfläche der Vorrichtung zur optischen Strahltransformation mindestens eine konkave toroidale refraktive Fläche auf, so dass die mindestens eine Vorrichtung zur optischen Strahltransformation den Querschnitt des durch sie hindurchtretenden mindestens einen Lichtstrahles zumindest abschnittsweise an einer zu der Ausbreitungsrichtung des jeweiligen Abschnittes des Lichtstrahles parallelen Ebene spiegeln kann. Durch eine derartige Spiegelung kann ebenfalls das von einer beispielsweise linienförmigen Lichtquelle ausgehende Licht derart transformiert werden, dass sich vor dem Durchgang in Längsrichtung der linienförmigen Lichtquelle erstreckende Abschnitte des Querschnittes des Lichtstrahles nach dem Durchgang durch die erfindungsgemäße Vorrichtung senkrecht zu der Längsrichtung der linienförmigen Lichtquelle erstrecken. Damit kann ebenso wie mit den vorgenannten Vorrichtungen aus dem Stand der Technik beispielsweise bei einem Laserdiodenbarren die Divergenz der sogenannten fast-axis mit der Divergenz der sogenannten slow-axis vertauscht werden. Zusätzlich kann durch die Wahl der konkaven toroidalen refraktiven Flächen anstelle von Zylinderflächen erreicht werden, dass Abbildungsfehler, insbesondere astigmatische Abbildungsfehler vermieden werden. Hierzu kann zum Beispiel längs des Torus der refraktiven Fläche die konkave Krümmung zusätzlich variieren.

Bei einer erfindungsgemäßen Anordnung kann die Torusachse dieser mindestens einen refraktiven Fläche gegenüber der Längsrichtung eines im wesentlichen linienförmigen oder rechteckförmigen Querschnitts eines einfallenden Lichtstrahls innerhalb der Ebene der Eintritts- und/oder Austrittsfläche geneigt sein, vorzugsweise unter einem Winkel von etwa 45°. Insbesondere bei einer Neigung der Torusachse um etwa 45° wird der Querschnitt des einfallenden Lichtstrahls komplett oder segmentweise derart in sich gespiegelt, dass die Divergenz der fast-axis mit der der slow-axis vertauscht wird. Die mindestens eine Eintritts- und/oder Austrittsfläche kann eine im wesentlichen langgestreckte, vorzugsweise im wesentlichen rechteckige Form aufweisen, wobei dann die Torusachse der mindestens einen toroidalen refraktiven Fläche innerhalb dieser Fläche gegenüber der Längsrichtung der Fläche unter einem Winkel von vorzugsweise 45° geneigt ist.

Vorteilhafterweise weisen sowohl die mindestens eine Eintritts- als auch die mindestens eine Austrittsfläche konkave toroidale refraktive Flächen auf, die in der mittleren Ausbreitungsrichtung der auf die Vorrichtung einfallenden Lichtstrahlen einander gegenüberliegend angeordnet sind. Vorzugsweise weisen die mindestens eine Eintritts- und die mindestens eine Austrittsfläche jeweils eine Anzahl von nebeneinander und parallel zueinander angeordneten konkaven toroidalen refraktiven Flächen gleicher Brennweite auf. Auf diese Weise wird gewährleistet, dass von einer flächigen Lichtquelle austretende Lichtstrahlen durch nebeneinander angeordnete toroidale refraktive Flächen in die Vorrichtung eintreten und durch die gegenüberliegenden toroidalen refraktiven Flächen wieder austreten, wobei durch die gleichen Brennweiten sämtlicher toroidaler refraktiver Flächen sämtliche Querschnitte der durch die Vorrichtung hindurchtretenden Teilstrahlen analog transformiert werden.

Gemäß einer bevorzugten Ausführungsform der vorliegenden Erfindung ist die Vorrichtung als im wesentlichen quaderförmiger Körper ausgeführt mit jeweils einer zueinander parallen Eintritts- und Austrittsfläche, wobei deren Abstand zueinander vorzugsweise der doppelten Brennweite der toroidalen refraktiven Flächen entspricht. Durch die parallele Anordnung von Eintritts- und Austrittsfläche wird gewährleistet, dass Lichtstrahlen nach dem Durchgang durch die Vorrichtung ihre Richtung beibehalten. Durch die Wahl des Abstands der Eintritts- und Austrittsfläche gleich der doppelten Brennweite der toroidalen refraktiven Flächen wird gewährleistet, dass Lichtstrahlen beim Durchgang durch die Vorrichtung nur eine Querschnittstransformation, nicht jedoch eine Fokussierung oder Aufweitung erfahren.

Gemäß einer alternativen bevorzugten Ausführungsform der vorliegenden Erfindung besteht die Vorrichtung aus zwei im wesentlichen quaderförmigen Körpern, die jeweils eine Eintrittsfläche und eine dazu parallele Austrittsfläche umfassen, deren Abstand zueinander vorzugsweise kleiner als die einfache Brennweite der toroidalen refraktiven Flächen ist. Diese beiden quaderförmigen Körper sind vorzugsweise so zueinander angeordnet, dass die durch jeweils in einem Körper gegenüberliegenden toroidalen refraktiven Flächen gebildeten Linsenelemente zwischen den quaderförmigen Körpern eine gemeinsame Brennebene aufweisen. Auf diese Weise wird zum einen auch gewährleistet, dass durch die Vorrichtung hindurchtretende Lichtstrahlen nur hinsichtlich ihres Querschnittes transformiert, nicht jedoch fokussiert oder aufgeweitet werden. Weiterhin können aufgrund der Fokussierung der durch die Vorrichtung hindurchtretenden Lichtstrahlen in der zwischen den quaderförmigen Körpern angeordneten gemeinsamen Brennebene auch Lichtquellen mit einer größeren Divergenz in einer Richtung oder Lichtquellen mit in einer Richtung nahe beieinander liegenden emittierenden Abschnitten effektiver gehandhabt werden, so dass die Verluste bei der Abbildung beispielsweise auf die Stirnfläche einer Lichtleitfaser verringert werden können.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Dabei zeigen

Fig. 1a    eine Draufsicht auf eine erfindungsgemäße Anordnung zur optischen Strahltransformation;

Fig. 1b    eine Seitenansicht der Anordnung gemäß Fig. 1a;

Fig. 2a    eine Draufsicht auf eine erfindungsgemäße Vorrichtung zur optischen Strahltransformation;

Fig. 2b    eine Ansicht gemäß dem Pfeil IIb-IIb in Fig. 2a;

Fig. 3a    eine perspektivische Ansicht eines Linsenelementes einer erfindungsgemäßen Vorrichtung zur optischen Strahltransformation mit einem beispielhaften Strahlbündel;

Fig. 3b    eine schematische Ansicht einer Strahltransformation mit dem Linsenelement gemäß Fig. 3a;

Fig. 4    einen schematischen Schnitt längs der Linie IV-IV in Fig. 2b;

Fig. 5a    eine perspektivische Ansicht einer weiteren Ausführungsform einer erfindungsgemäßen Vorrichtung;

Fig. 5b    eine Ansicht gemäß dem Pfeil Vb in Fig. 5a;

Fig.6    einen schematischen Schnitt gemäß der Linie VI-VI in Fig. 5b.

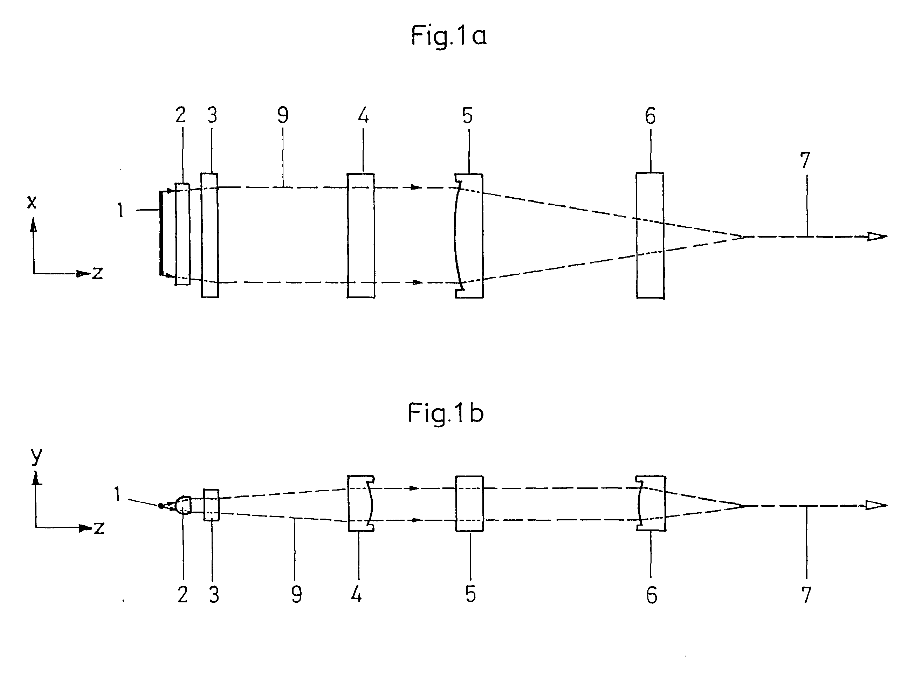

Die in Fig. 1 abgebildete Anordnung zur optischen Strahltransformation umfaßt eine als Laserdiodenbarren ausgeführte Lichtquelle 1, die eine im wesentlichen linienförmige Lichtquelle darstellt. Anstelle einer linienförmigen Lichtquelle kann auch eine punktförmige Lichtquelle oder eine aus Gruppen von Punktquellen bestehende Lichtquelle oder eine flächenförmige Lichtquelle mit beliebiger Winkelverteilung Verwendung finden. In Fig. 1a und Fig. 1b sind zur besseren Orientierung Koordinatenachsen x, y, z eingezeichnet. Die Lichtquelle 1 erstreckt sich beispielhaft im wesentlichen in x-Richtung, in der sie beispielsweise eine Ausdehnung von 10 mm aufweist. Demgegenüber ist die Ausdehnung der Lichtquelle 1 in y-Richtung etwa ein Mikrometer. Das von der Lichtquelle 1 ausgesendete Licht weist in Richtung der y-Achse eine wesentlich größere Divergenz auf als in Richtung der x-Achse. Die Divergenz in y-Richtung beträgt etwa 0,5 rad, wohingegen die Divergenz in x-Richtung etwa 0,1 rad beträgt. Weiterhin ist eine beispielsweise als Laserdiodenbarren ausgeführte Lichtquelle 1 in x-Richtung in mehrere emittierende Abschnitte, beispielsweise in 20 - 25 Abschnitte in seiner Längsrichtung unterteilt.

Der von der Lichtquelle 1 ausgehende mindestens eine Lichtstrahl 9 wird in einer Zylinderlinse 2, die sich im wesentlichen in x-Richtung erstreckt, derart beugungsbegrenzt kollimiert, dass die Divergenz in y-Richtung nur noch 0,005 rad beträgt, so dass das Licht hinter der Zylinderlinse 2 im wesentlichen parallel bezüglich der y-Achse verläuft.

In der im nachfolgenden noch näher zu beschreibenden Vorrichtung 3 zur optischen Strahltransformation wird der Querschnitt des einfallenden Lichts an einer zu seiner Ausbreitungsrichtung parallelen Fläche reflektiert, so dass nach dem Austritt aus der Vorrichtung 3 die Divergenz in y-Richtung etwa 0,1 rad und die Divergenz in x-Richtung etwa 0,005 rad beträgt. Ein derartiger in x-Richtung nur unwesentlich divergenter und in y-Richtung moderat divergenter Lichtstrahl kann durch die beispielsweise als Zylinderlinsen ausgeführten Fokussierungselemente 4, 5, 6 problemlos auf das Ende einer Lichtleitfaser 7 fokussiert und in diese eingekoppelt werden.

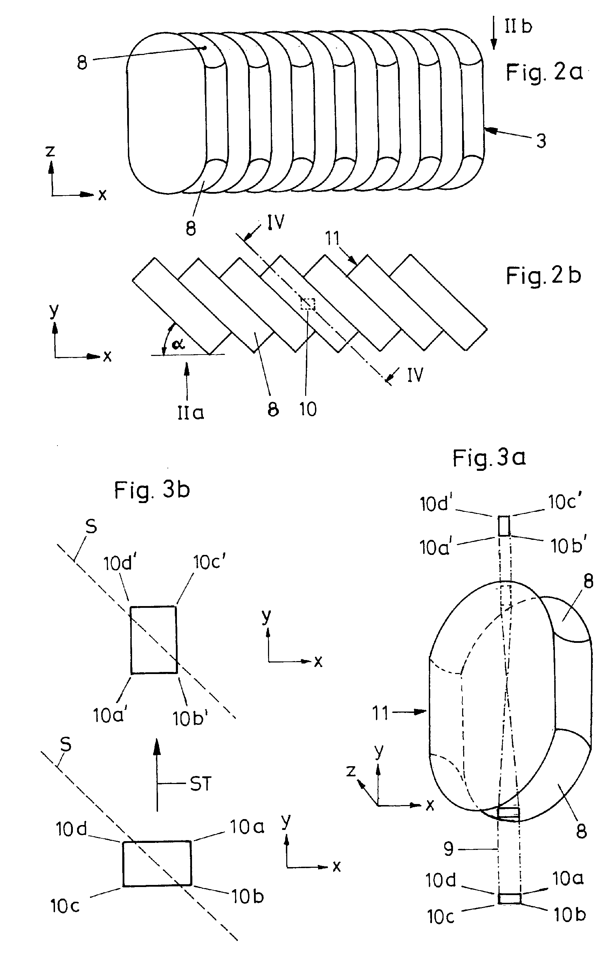

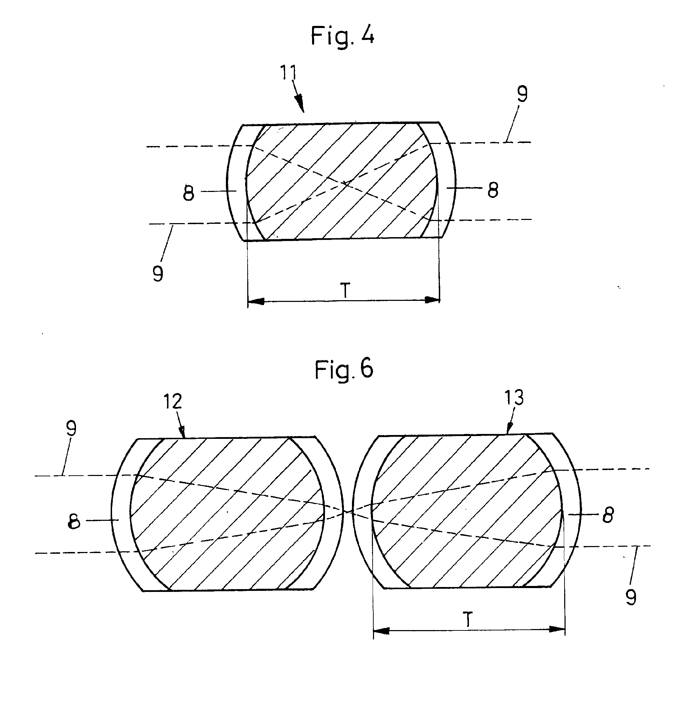

Aus Fig. 2 ist eine Ausführungsform einer erfindungsgemäßen Vorrichtung 3 zur optischen Strahltransformation ersichtlich. Es handelt sich um einen im wesentlichen quaderförmigen Block aus einem transparentem Material, auf dem sowohl auf der Eintrittsseite als auch auf der Austrittsseite eine ganze Anzahl von konkaven toroidalen refraktiven Flächen 8 parallel zueinander angeordnet sind. Die Torusachsen der refraktiven Flächen 8 schließen mit der Basisseite der quaderförmigen Vorrichtung 3, die in x-Richtung verläuft, einen Winkel $\alpha$ von 45° ein. In Fig. 2b ist der diesem Winkel $\alpha$ entsprechende Winkel $\alpha$ zwischen der x-Richtung und der zu der Torusachse senkrechten seitlichen Begrenzung eines der Linsenelemente 11 eingezeichnet. In dem abgebildeten Ausführungsbeispiel sind etwa zehn konkave toroidale refraktive Flächen 8 nebeneinander auf jeder der beiden x- y-Flächen der Vorrichtung 3 angeordnet. Jeweils zwei einander gegenüberliegende refraktive Flächen 8 bilden ein Linsenelement 11. Ein jedes der Linsenelemente 11 wirkt im wesentlichen wie eine Bikonvex-Zylinderlinse, bei der jedoch durch die konkave Querkrümmung der Fläche 8 beispielsweise astigmatischen Abbildungsfehlern entgegengewirkt werden kann. Aus Fig. 4 ist ersichtlich, dass die in z-Richtung gemessene Tiefe T der Linsenelemente 11 gleich der zweifachen Brennweite einer jeder dieser im wesentlichen bikonvexen Linsenelemente 11 ist. Dies entspricht

$$T = 2F_n.$$

Hierbei ist T die Tiefe der als Array von toroidalen Linsenelementen 11 ausgeführten Vorrichtung 3 zur optischen Strahltransformation und $F_n$ die Brennweite eines jeden der Linsenelemente 11 bei einem Brechungsindex n des gewählten Materials der Vorrichtung 3. Aus Fig. 4 ist ein schematischer Strahlengang eines Lichtstrahls 9 ersichtlich, der verdeutlicht, dass ein jedes der Linsenelemente 11 einen parallelen Lichtstrahl 9 wiederum in einen parallelen Lichtstrahl 9 überführt. Es bleibt anzumerken, dass Fig. 4, ähnlich wie Fig. 6 nur schematisch den Strahlengang verdeutlichen soll und keine exakte Wiedergabe des Strahlengangs durch die abgebildete geometrische Vorrichtung darstellt.

Aus Fig. 3 ist der Durchgang eines auf ein Linsenelement 11 auftreffenden Lichtstrahls 9 mit einem Querschnitt 10 durch eine erfindungsgemäße Vorrichtung 3 am Beispiel von Eckpunkten 10a, b, c, d des Querschnitts 10 ersichtlich. Die Vorrichtung 3 ist gemäß der Anordnung in Fig. 1 so ausgerichtet, dass die refraktiven Flächen 8 im wesentlichen x-y-Flächen sind.

Aus Fig. 3a beziehungsweise Fig. 3b ist ersichtlich, dass der Querschnitt 10 des auf das Linsenelement 11 einfallenden Lichtstrahles 9 einem Rechteck entspricht, das in x-Richtung größer ausgedehnt ist als in y-Richtung. Nach dem Durchgang durch das Linsenelement 11 entspricht der Querschnitt 10 des Lichtstrahles 9 ebenfalls einem Rechteck. Dieses ist jedoch in y-Richtung größer ausgedehnt als in x-Richtung.

Aus der insbesondere aus Fig. 3b ersichtlichen schematischen Ansicht ergibt sich, dass durch den Durchtritt des Lichtstrahles 9 durch das Linsenelement 11 eine Strahltransformation vorgenommen wird, die durch den Pfeil ST in Fig. 3b verdeutlicht wird. Die durch das Linsenelement 11 vorgenommene Strahltransformation entspricht einer Spiegelung an der in Fig. 3b eingezeichneten Spiegelebene S, die parallel zur Strahlrichtung verläuft und sowohl gegenüber der x- als auch gegenüber der y-Richtung um 45° geneigt ist. Auf diese Weise wird zum einen erreicht, dass ein sich vor der Strahltransformation in x-Richtung erstreckendes Rechteck oder eine sich vorher in x-Richtung erstreckende Linie nach der Strahltransformation in y-Richtung erstreckt ist. Weiterhin bewirkt die Spiegelung an der Spiegelebene S eine Vertauschung der Reihenfolge der Eckpunkte 10a, 10b, 10c, 10d des Querschnittes 10 des Strahles 9 derart, dass die vorher aufsteigend im Uhrzeigersinn geordneten Eckpunkte 10a, 10b, 10c, 10d nach der Strahltransformation als Eckpunkte 10a', 10b', 10c', 10d' im Gegenuhrzeigersinn aufsteigend geordnet sind, wie dies aus Fig. 3b deutlich ersichtlich ist.

Durch die Vertauschung der Ausdehnung in x-Richtung und der Ausdehnung in y-Richtung vermittels der Strahltransformation wird verhindert, dass beispielsweise aus einzelnen Abschnitten der Lichtquelle 1 hervorgehende Teilstrahlen aufgrund der vor der Vorrichtung 3 unter Umständen relativ starken Divergenz in x-Richtung einander überlappen, da nach dem Durchgang durch die Vorrichtung 3 nur noch eine beugungsbegrenzte Restdivergenz in x-Richtung vorhanden ist, wohingegen die Divergenz in y-Richtung der ursprünglichen Divergenz in x-Richtung von beispielsweise etwa 0,1 rad entspricht.

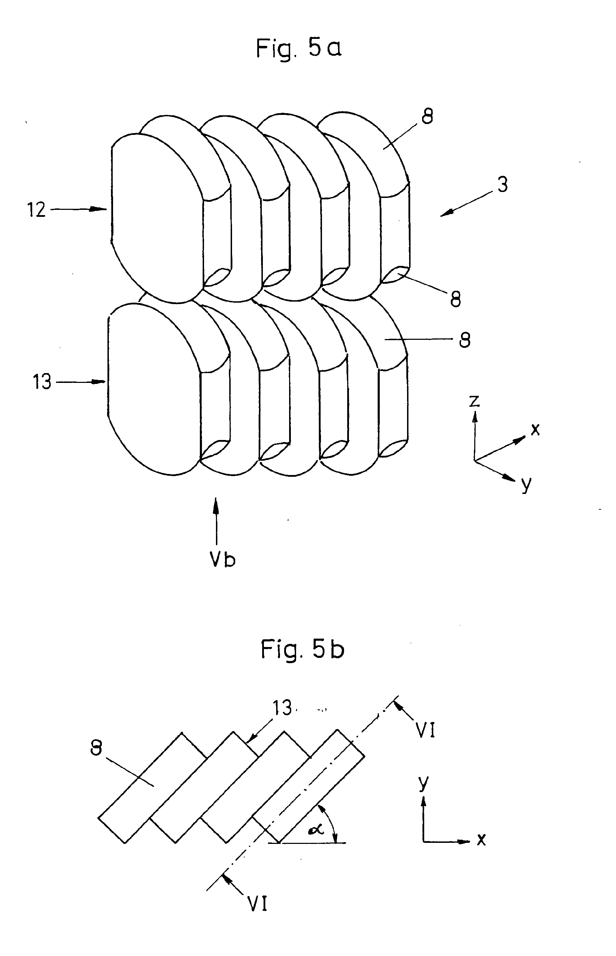

In Fig. 5 ist ein weiteres Ausführungsbeispiel einer erfindungsgemäßen Vorrichtung 3 zur optischen Strahltransformation abgebildet. Hier werden anstelle eines Arrays zwei Arrays aus Linsenelementen 12, 13 verwendet, bei denen ebenfalls jeweils die x-y-Flächen mit einem Array von unter einem Winkel α der Torusachsen zur Grundfläche von 45° angeordneten konkaven toroidalen refraktiven Flächen 8 versehen sind. Der Winkel α ist in Fig. 5b äquivalent zu dem Winkel α in Fig. 2b eingezeichnet. Aus Fig. 6 ist jedoch ersichtlich, dass diese Linsenelemente 12, 13 eine geringere Tiefe T aufweisen, wobei die Tiefe des einzelnen Linsenelementes 12, 13 hier kleiner als die einfache Brennweite $F_n$ gewählt werden kann. Dies wird durch die schematische Zeichnung in Fig. 6 verdeutlicht. Hier wird gezeigt, dass jedes der Linsenelemente 12, 13 zumindest abschnittsweise eine Bikonvexlinse bildet, die jeweils identische Brennweiten haben, so dass von rechts oder von links einfallende Parallelstrahlbündel auf eine zwischen den Linsenelementen 12, 13 angeordnete gemeinsame Brennebene fokussiert werden. Aufgrund der Tatsache, dass die in das zweite Linsenelement 13 einfallenden Lichtstrahlen von einem auf der gemeinsamen Brennebene liegenden Fokuspunkt ausgehen, erhöht sich die Effizienz der Strahltransformationen, weil die Abmessung der in der Brennebene gelegenen Lichtquelle kleiner ist als die Abmessung des auf die Eintrittsfläche des Linsenelementes 12 von der Zylinderlinse 2 einfallenden Strahlenbündels. Mit einer derartigen Vorrichtung zur optischen Strahltransformation können auch Lichtquellen mit einer größeren Divergenz oder Lichtquellen mit in x-Richtung näher beieinander liegenden emittierenden Abschnitten oder linien- oder flächenförmige Lichtquellen effektiver gehandhabt werden, so dass die Verluste verringert werden können.

**Patentansprüche**

1. Anordnung zur optischen Strahltransformation, die zur Abbildung einer Lichtquelle (1) oder mehrerer Lichtquellen auf die Stirnseite einer Lichtleitfaser (7) dienen kann, umfassend mindestens eine Lichtquelle (1), die mindestens einen Lichtstrahl (9) aussenden kann, sowie weiterhin umfassend ein Abbildungselement (2) und mindestens eine Vorrichtung (3) zur optischen Strahltransformation, wobei das Abbildungselement (2) den von der mindestens einen Lichtquelle (1) ausgesandten mindestens einen Lichtstrahl (9) auf die mindestens eine Vorrichtung (3) zur optischen Strahltransformation abbilden kann, und wobei der mindestens eine Lichtstrahl (9) durch diese zumindest teilweise hindurchtreten kann, **dadurch gekennzeichnet, dass** die Vorrichtung (3) zur optischen Strahltransformation auf einer Eintritts- und/oder Austrittfläche des oder der Lichtstrahlen (9, 10, 11, 12, 16, 18, 21) mindestens eine konkave toroidale refraktive Fläche (8) aufweist, so dass die mindestens eine Vorrichtung (3) zur optischen Strahltransformation den Querschnitt (10) des durch sie hindurchtretenden mindestens einen Lichtstrahls (9) zumindest abschnittsweise an einer zu der Ausbreitungsrichtung (z) des jeweiligen Abschnitts des Lichtstrahls (9) parallelen Ebene (S) spiegeln kann.

2. Anordnung nach Anspruch 1, **dadurch gekennzeichnet, dass** der mindestens eine auf die Vorrichtung (3) auftreffende Lichtstrahl (9) einen linienförmigen oder rechteckförmigen Querschnitt (10) aufweist und dass die Torusachse der mindestens einen konkaven toroidalen Fläche (8) gegenüber der Längsrichtung des linien- oder rechteckförmigen Querschnitts (10) des mindestens einen einfallenden Lichtstrahls (9) innerhalb der Ebene (x-y) der Eintritts- bzw. Austrittsfläche geneigt ist, vorzugsweise unter einem Winkel (α) von etwa 45° und/oder -45°.

3. Anordnung nach einem der Ansprüche 1 oder 2, **dadurch gekennzeichnet, dass** die Anordnung weiterhin mindestens ein Fokussierungselement (4, 5, 6) umfaßt, mit der der mindestens eine aus der Vorrichtung (3) zur optischen Strahltransformation austretende Lichtstrahl (9) auf die Stirnseite einer Lichtleitfaser (7) fokussiert werden kann.

4. Anordnung nach einem der Ansprüche 1 bis 3, **dadurch gekennzeichnet, dass** das Abbildungselement (2) eine Zylinderlinse ist.

5. Vorrichtung zur optischen Strahltransformation zur Verwendung in einer Anordnung nach einem der Ansprüche 1 bis 4 mit mindestens einer Eintritts- und mindestens einer Austrittsfläche, durch die der mindestens eine zu transformierende Lichtstrahl (9) hindurchtreten kann, **dadurch gekennzeichnet, dass** die Vorrichtung (3) zur optischen Strahltransformation auf der mindestens einen Eintritts- und/oder der mindestens einen Austrittsfläche mindestens eine konkave toroidale refraktive Fläche (8) aufweist, so dass die Vorrichtung (3) zur optischen Strahltransformation den Querschnitt (10) eines durch sie hindurchtretenden Lichtstrahls (9) zumindest abschnittsweise an einer zu der Ausbreitungsrichtung (z) des jeweiligen Abschnitts des Lichtstrahls (9) parallelen Ebene (S) spiegeln kann.

6. Vorrichtung nach Anspruch 5, **dadurch gekennzeichnet, dass** auf der mindestens einen Eintrittsfläche und der mindestens einen Austrittsfläche jeweils konkave toroidale refraktive Flächen (8) vorgesehen sind, die in Richtung der mittleren Ausbreitungsrichtung (z) des mindestens einen Lichtstrahles (9) einander gegenüberliegend in der Vorrichtung (3) angeordnet sind.

7. Vorrichtung nach einem der Ansprüche 5 oder 6, **dadurch gekennzeichnet, dass** die mindestens eine Eintritts- und/oder die mindestens eine Austrittsfläche der Vorrichtung (3) eine im wesentlichen langgestreckte Form aufweist und dass die Torusachse der mindestens einen toroidalen refraktiven Fläche (8) gegenüber der Längsrichtung der Eintritts- bzw. Austrittsfläche innerhalb der Ebene (x-y) der Eintritts- bzw. Austrittsfläche geneigt ist, vorzugsweise unter einem Winkel ($\alpha$) von 45° und/oder -45°.

8. Vorrichtung nach einem der Ansprüche 5 bis 7, **dadurch gekennzeichnet, dass** die mindestens eine Eintrittsfläche und die mindestens eine Austrittsfläche mit einer Anzahl von nebeneinander und parallel zueinander angeordneten konkaven toroidalen refraktiven Flächen (8) gleicher Brennweite ($F_n$) versehen sind.

9. Vorrichtung nach Anspruch 8, **dadurch gekennzeichnet, dass** die Vorrichtung (3) als im wesentlichen quaderförmiger Körper ausgeführt ist mit jeweils einer im wesentlichen zueinander parallelen Eintritts- und Austrittsfläche, wobei deren Abstand (T) zueinander vorzugsweise der doppelten Brennweite ($F_n$) der refraktiven Flächen (8) entspricht.

10. Vorrichtung nach Anspruch 8, **dadurch gekennzeichnet, dass** die Vorrichtung (3) aus zwei im wesentlichen quaderförmigen Körpern besteht, die jeweils eine Eintrittsfläche und eine im wesentlichen parallel dazu ausgerichtete Austrittsfläche umfassen, deren Abstand (T) zueinander jeweils vorzugsweise kleiner als die einfache Brennweite ($F_n$) der refraktiven Flächen (8) ist.

## Fig.1a

## Fig.1b

EP 1 176 450 A2

Fig. 2a

8

z

x

II b

3

8

Fig. 2b

y

x

α

IV

11

IV

II a

8   10

Fig. 3a

Fig. 3b

S

10d'   10c'

10a'   10b'

y

x

S

ST

10d   10a

10c   10b

y

x

10d'   10c'

10a'   10b'

8

11

y

z

x

8

9

10d   10a

10c   10b

8

## Fig. 4

11

9

8 — — 8

9

T

## Fig. 6

12 13

9

8 — — 8

9

T

# Fig. 5a

# Fig. 5b